Europäisches Patentamt

European Patent Office

Office européen des brevets

(11) Veröffentlichungsnummer: **0 485 367 A2**

# (12) EUROPÄISCHE PATENTANMELDUNG

(21) Anmeldenummer: **92102184.6**

(22) Anmeldetag: **29.06.89**

(51) Int. Cl.5: **B60T 8/88**, B60T 8/44

This application was filed on 10 - 02 - 1992 as a divisional application to the application mentioned under INID code 60.

(30) Priorität: **26.08.88 DE 3828933**
**26.08.88 DE 3828932**
**26.08.88 DE 3828931**

(43) Veröffentlichungstag der Anmeldung:
**13.05.92 Patentblatt 92/20**

(60) Veröffentlichungsnummer der früheren
Anmeldung nach Art. 76 EPÜ: **0 396 640**

(84) Benannte Vertragsstaaten:
**DE FR GB**

(71) Anmelder: **ALFRED TEVES GMBH**
**Guerickestrasse 7**
**W-6000 Frankfurt/Main 90(DE)**

(72) Erfinder: **Burgdorf, Jochen**
**Neugasse 11**
**W-6050 Offenbach-Rumpenheim(DE)**
Erfinder: **Volz, Peter, Dr.**
**In den Wingerten 14**
**W-6100 Darmstadt(DE)**

(74) Vertreter: **Blum, Klaus-Dieter, Dipl.-Ing.**
**c/o ALFRED TEVES GMBH Guerickestrasse 7**
**W-6000 Frankfurt/Main 90(DE)**

(54) Verfahren zur Überwachung einer Bremsanlage und Bremsanlage zur Durchführung dieses Verfahrens.

(57) Es wird ein Verfahren zur Überwachung einer Bremsanlage vorgestellt, die mit einem Antiblockier- und/oder Antriebsschlupfregelsystem ausgerüstet ist. Der Weg, die Geschwindigkeit und die Beschleunigung des Kolbens (45) des Hauptzylinders (56) werden durch einen Sensor (64) erfaßt. Die so ermittelten Bremsbetätigungsdaten werden in Form von elektrischen Signalen an den elektronischen Regler (66) weitergeleitet. Durch einen Radsensor (67) werden die Raddaten in Form von elektrischen Signalen an den Regler (66) weitergeleitet. Der Regler prüft, ob die Raddaten ein einer ordnungsgemäßen Bremsung entsprechendes Korrelat zu den Bremsbetätigungsdaten darstellen. Ist dies nicht der Fall, dann wird über ein Schalter (59) betätigt. Hierdurch wird der Elektromotor mit Strom versorgt. Der Motor (58) treibt die Pumpe (53) an. Die Pumpe fördert Druckmittel in den Radzylinder (51), der vorher infolge einer Störung nicht mit Druckmittel versorgt werden konnte. Mit dem erfindungsgemäßen Verfahren wird eine Universalüberwachung der gesamten Bremsanlage mit einfachen Mitteln erzielt.

EP 0 485 367 A2

Die Erfindung bezieht sich auf Verfahren zur Überwachung der Funktion oder Funktionsfähigkeit einer Bremsanlage, insbesondere einer geregelten hydraulischen Bremsanlage für Fahrzeuge, und auf eine Bremsanlage zur Durchführung dieses Verfahrens.

Die Bremsen des Standes der Technik sind, insbesondere wenn sie lange in Betrieb sind, stör- und fehleranfällig. Die Ursachen können sein: Dampfblasenbildung, verursacht durch zu hohen Wassergehalt in der Bremsflüssigkeit, Überlastung bei Passfahrten, Überhitzen beim Fahren mit angezogener oder blockierter Handbremse.

Weitere Ursachen für Störungen sind: Undichtheiten in den hydraulischen Bremskreisen, Schmutz in den Ventilen usw..

Eine besonders sorgfältige Überwachung des Bremssystems ist notwendig, wenn die Bremsanlagen mit Antiblockier- oder Antriebsschlupfregelvorrichtungen ausgerüstet sind.

Derartige Antiblockiervorrichtungen sind beispielsweise im Sonderdruck aus der "Automobil-Revue" Nr. 42/1985 beschrieben worden, und zwar unter dem Titel "Antiblockiersysteme".

Durch die Offenlegungsschrift 28 22 143 ist ein Antiblockierregelsystem für ein Bremssystem, bei dem zur Bremsdruckerzeugung eine Pumpe und ein damit verbundener Speicher vorgesehen ist, bestehend aus Meßwertgebern zur Ermittlung des Radbewegungsverhaltens der Räder, einer Auswertschaltung zur Umsetzung der Signale in Bremsdrucksteuersignale und eine Bremsdrucksteuereinrichtung, der diese Signale zugeführt werden und die den Bremsdruck variiert, wobei das System Mittel zur Änderung der Regelfrequenz enthält, bekannt geworden.

Nach der vorgenannten Offenlegungsschrift wird vorgeschlagen, der Pumpe und dem Speicher einen Druckfühler zuzuordnen, der ein von dem Speicherdruck abhängiges Signal erzeugt, und den Ausgang des Druckfühlers mit den Mitteln zur Änderung der Regelfrequenz derart zu verbinden, daß mit abnehmendem Speicherdruck die Regelfrequenz erniedrigt wird.

Durch die DE-Offenlegungsschrift 36 12 793 ist eine hydraulische Bremsanlage für Kraftfahrzeuge mit Antiblockierregeleinrichtung, mit einem mit einem ersten Druckmedium betriebenen Hauptbremszylinder und einem auf diesen mechanisch einwirkenden, mit einem zweiten Druckmedium betriebenen Bremskraftverstärker, der als Druckmodulator für die Antiblockierregelung betreibbar ist, wobei in den vom Hauptbremszylinder zu den Radbremszylindern führenden Bremsleitungen jeweils Sperrventile vorgesehen sind, bekannt geworden.

In der Offenlegungsschrift 36 12 793 werden folgende Merkmale vorgeschlagen:

a) Als Bremskraftverstärker ist ein an sich bekannter hydraulischer Bremskraftverstärker mit einem mit einer hydraulischen Druckquelle verbindbaren Druckleitungsanschluß und mindestens einem mit einem Vorratsbehälter verbindbaren Rücklaufleitungsanschluß vorgesehen, der darüber hinaus einen mit seiner Arbeitskammer in Verbindung stehenden Hilfsanschluß aufweist.

b) Die Druckmodulation während der Antiblockierregelung ist zum einen durch den Arbeitskolben des Bremskraftverstärkers und zum anderen durch ein davon unabhängiges besonderes Modulationsglied erzeugt.

c) Bei durchschnittlicher Modulationsbreite (Größe der Druckänderungen) ist die Druckmodulation zumindest annähernd ausschließlich durch das Modulationsglied bewirkt, während der Arbeitskolben in seiner Axialposition derart festgehalten ist, daß er nicht in Richtung eines Druckaufbaus verschiebbar ist.

d) Bei größeren erforderlichen Druckänderungen ist auch der Axialkolben den Regelerfordernissen entsprechend axial verschiebbar.

In der Offenlegungsschrift 36 11 931 wird eine hydraulische Bremsanlage mit Radschlupf-Regeleinrichtung, insbesondere für Kraftfahrzeuge, beschrieben, mit einem durch einen hydraulischen Kraftverstärker unter Druck setzbaren Hauptzylinder, bei der zwischen dem Hauptzylinder und dem am Hauptzylinder angeschlossenen Radbremsen Ventilmittel vorgesehen sind, durch die Druckmittel aus den Radbremsen entnehmbar ist, wobei aus den Radbremsen entnommenes Druckmittel aus dem Druckraum des hydraulischen Kraftverstärkers oder einer Hilfsdruckquelle ergänzbar ist und bei der während des Regelvorgangs eine Hubbegrenzung des Bremspedals erfolgt.

In der Offenlegungsschrift 36 11 931 wird vorgeschlagen, daß an die von den Arbeitskammern des Hauptzylinders zu den Radbremsen führenden Bremsleitungen Druckleitungen angeschlossen sind, die über Ventilmittel an den Druckraum des hydraulischen Verstärkers und/oder an die Hilfsdruckquelle anschließbar sind, wobei in den Bremsleitungen zusätzlich Sperrventile eingeschaltet sind, über die die Verbindungen der Bremsleitungen in den Arbeitsräumen des Hauptzylinders unterbrechbar sind.

Durch die Offenlegungsschrift 37 31 603 ist bereits eine Bremsanlage, insbesondere für Kraftfahrzeuge, mit einem Hauptzylinder, Radzylindern und einer Vorrichtung zur Antiblockierregelung bekannt geworden.

In dieser letztgenannten Offenlegungsschrift wird vorgeschlagen, daß im Regelmodus zur Positionierung des Kolbens des Hauptzylinders in einer gewünschten Position eine Druckmittelquelle variierbar ist, die durch eine hydraulische Leitung mit dem Hauptzylinder verbunden ist und die durch ihr Fördervolumen den Kolben positioniert.

Erfindungsgemäß läßt sich eine technisch fortschrittliche Überwachung von Bremsanlagen dieser Art mit dem eingangs genannten Verfahren dadurch erreichen, daß bei Betätigung der Bremse meßtechnisch, insbesondere elektrisch, ein oder mehrere Daten mindestens eines Elements im Bereich der Bremsbetätigung erfaßt werden (Bremsbetätigungsdaten), daß meßtechnisch, insbesondere elektrisch, ein oder mehrere Daten mindestens eines Elements im Bereich des abzubremsenden Rades erfaßt werden (Raddaten) und daß in einer Überwachungseinheit geprüft wird, ob die Raddaten ein einer ordnungsgemäßen Bremsung entsprechendes Korrelat zu den Bremsbetätigungsdaten darstellen.

Dabei kann vorgesehen werden, daß die Prüfung nach Plausibilitätskriterien durchgeführt wird, die zwischen den Bremspedalvektoren: Weg, Geschwindigkeit, Beschleunigung einerseits und den Vektoren der Fahrzeugbewegung andererseits bestehen.

Das erfindungsgemäße Verfahren wird dadurch ergänzt, daß bei Nichtkorrelieren der Raddaten mit den Bremsbetätigungsdaten die Überwachungseinheit eine Störanzeige erzeugt und/oder die Regelvorrichtung ganz oder teilweise abschaltet.

Bei Nichtkorrelieren der Raddaten mit den Bremsbetätigungsdaten wird gemäß der Erfindung vorgeschlagen, daß durch die Überwachungseinheit ein Signal erzeugt wird, das ein Hilfsaggregat, beispielsweise eine Pumpe und/oder einen Energiespeicher, insbesondere hydropneumatischen Speicher, aktiviert, welches bei Bremsbetätigung eine ordnungsgemäße, nahezu ordnungsgemäße oder behelfsmäßige Bremsung herbeiführt.

Die Ermittlung der Bremsbetätigungsdaten kann dadurch erreicht werden, daß die Wege, Geschwindigkeiten, Beschleunigungen mindestens eines Elements der Bremsbetätigung, z.B. des Bremspedals, des Pedalwerks, der Hauptzylinderkolbenstange, des Hauptzylinderkolbens und/oder damit wirkungsmäßig verbundener Teile sensiert werden.

Nach einem weiteren Ausführungsbeispiel wird zur Ermittlung der Bremsbetätigungsdaten der Hauptzylinderdruck sensiert. Es kann auch das vom Hauptzylinder in die Bremsanlage geförderte Volumen sensiert werden.

Die in den einzelnen Ausführungsbeispielen beschriebenen Maßnahmen können natürlich auch kombiniert werden.

Die Raddaten werden dadurch ermittelt, daß die Raddrehzahl und/oder die Radumfangsgeschwindigkeit ermittelt werden.

Zur Verbesserung des Verfahrens zur Überwachung eines Antiblockier- und/oder Antriebsschlupfregelungssystems kann vorgesehen werden, daß zur Prüfung, ob die Raddaten ein einer ordnungsgemäßen Bremsung entsprechendes Korrelat zu den Bremsbetätigungsdaten darstellen, als eine Größe die Absolutgeschwindigkeit des Fahrzeugs oder eine der Absolutgeschwindigkeit entsprechende oder eine an die Absolutgeschwindigkeit angenäherte Referenzgeschwindigkeit verwertet wird.

Bei einer Bremsanlage, die durch das erfindungsgemäße Verfahren überwacht werden soll, wird vorgeschlagen, daß mindestens ein Element des Bremspedals und/oder Pedalwerks mit einem Wegsensor, Geschwindigkeitssensor und/oder Beschleunigungssensor ausgerüstet ist.

Andererseits kann auch vorgesehen werden, daß der Kolben und/oder die Kolbenstange des Hauptzylinders mit einem Wegsensor, Geschwindigkeitssensor und/oder Beschleunigungssensor ausgerüstet ist.

Nach einem weiteren Ausführungsbeispiel ist mindestens ein Druckraum des Hauptzylinders mit einem Drucksensor ausgerüstet. Alternativ oder zusätzlich kann der Hauptzylinder mit einem Volumensensor versehen sein.

Weitere Merkmale, Vorteile und Anwendungsmöglichkeiten der Erfindung gehen aus der folgenden Darstellung eines Ausführungsbeispiels anhand der beigefügten Abbildung hervor, die in schematischer Darstellung die wichtigsten Komponenten eines Antiblockiersystems wiedergibt.

Bei der nachfolgenden Beschreibung des Ausführungsbeispiels wird ausgegangen von der Deutschen Offenlegungsschrift 37 31 603.

In der Figur ist ein Bremspedal 1 über eine Kolbenstange 44 mit einem Kolben 45 verbunden. Bei einer Bewegung des Kolbens nach links wird im Druckraum 46 Druck aufgebaut, der im Normalbremsmodus über die Leitungen 47 - 50 zum Radzylinder 51 der Scheibenbremse 52 gelangt. Die Bremsanlage weist eine Pumpe 53 auf, die dem Druckmittelvorratsbehälter 54 Druckmittel entnimmt und über das Rückschlagventil 55 in die Leitungen 47,48 befördert. Druckmittel kann also einerseits über die Leitung 47 in den Druckraum 46 des Hauptzylinders 56 gelangen.

Andererseits kann Druckmittel über die Leitung 48, das Stromlos-Offen-Ventil 57 und die Leitungen 49,50 in den Radzylinder 51 gelangen.

Die Pumpe wird durch den Motor 58 angetrieben, der über einen Schalter, der in seiner Gesamtheit mit 59 bezeichnet ist, in Betrieb gesetzt werden kann.

Das Stromlos-Offen-Ventil 57, das elektromagnetisch betätigbar ist, und das Stromlos-Geschlossen-Ventil 60, das ebenfalls elektromagnetisch betätigbar ist, gehören zu einem Druckmodulator. Einzelheiten des Druckmodulators sind der Deutschen Offenlegungsschrift 37 31 603 zu entnehmen.

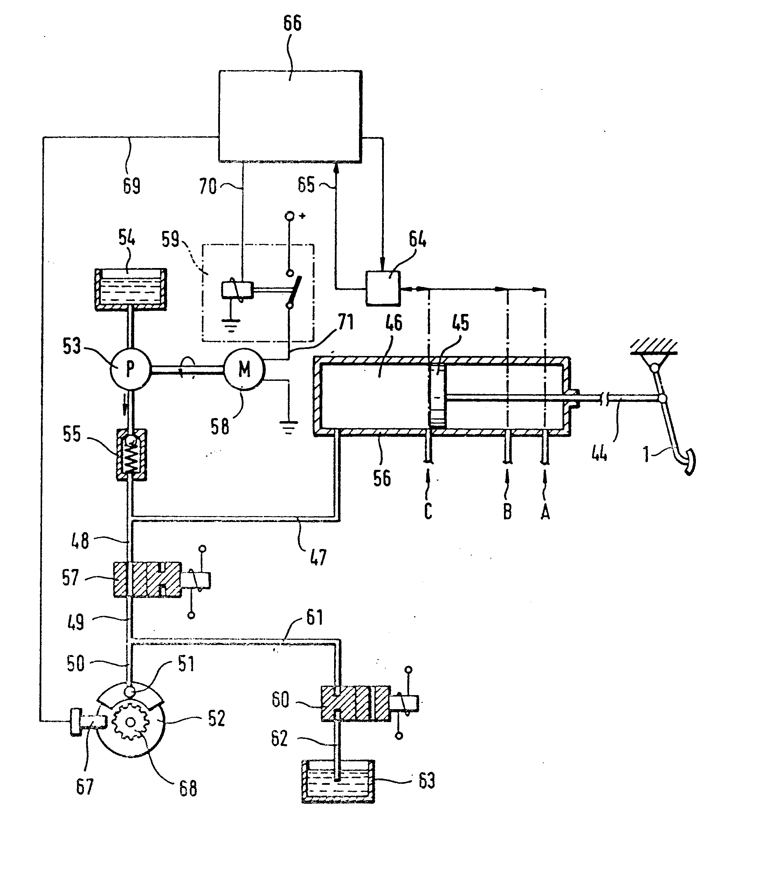

Die Stromlos-Offen-Ventile (SO-Ventile) und die Stromlos-Geschlossen-Ventile (SG-Ventile) des Druckmodulators der Deutschen Offenlegungsschrift 37 31 603 werden vom elektronischen Regler der Antiblockiervorrichtung gesteuert. In der Fig. 4 sind zur Vereinfachung nur die beiden Ventile 57,60, die dem Radbremszylinder 51, bzw. der Scheibenbremse 52, zugeordnet sind, eingetragen.

Diese Ventile sind als Teil des Druckmodulators nach der Deutschen Offenlegungsschrift 37 31 603 zu betrachten. Auch sie werden, wie in dieser Offenlegungsschrift beschrieben, entsprechend dem Regelalgorithmus des elektronischen Reglers geschaltet.

Wenn im Antinblockierregelmodus der Druck im Radzylinder gesenkt werden soll, wird das SO-Ventil 57 in seine Geschlossen-Position geschaltet, das SG-Ventil 60 wird geöffnet.

Druckmittel kann dadurch aus dem Radzylinder 51, durch die Leitungen 50,61, durch das in Offen-Position geschaltete SG-Ventil 60, die Leitung 62 in den Druckmittelvorratsbehälter 63 fließen.

Wird nach Maßgabe des im elektronischen Regler gespeicherten Regelalgorithmus eine Druckkonstanthaltephase verlangt, dann sind beide Ventile 57,60 geschlossen.

Im Falle, daß nach dem Regelalgorithmus ein Wiederanstieg des Drucks im Radzylinder 51 stattfinden soll, bleibt das SG-Ventil 60 geschlossen, während das SO-Ventil 57 in seine offene Ruheposition zurückbewegt wird.

Anhand der abgebildeten Bremsanlage werden mehrere Ausführungsbeispiele des erfindungsgemäßen Verfahrens beschrieben. Diese Ausführungsbeispiele können auch bei konventionellen Bremsen und bei Antiblockier- und/oder Antriebsschlupfregelvorrichtungen nach dem Stand der Technik, wie er beispielsweise eingangs beschrieben wurde, eingesetzt werden.

Bei Betätigung des Bremspedals 1 kann der Kolben unter anderem die mit A,B und C bezeichneten Positionen einnehmen. Diese Positionen werden als Bremsbetätigungsdaten durch den Sensor 64 und über die Signalleitung 65 an den elektronischen Regler 66 weitergegeben.

Der Sensor ist in weiteren Ausführungsbeispielen des erfindungsgemäßen Verfahrens in der Lage, anstelle des Wegs oder zusätzlich zum Weg die Geschwindigkeit und die Beschleunigung des Kolbens 45 zu sensieren. Wenn Geschwindigkeit und Beschleunigung des Kolbens als Bremsbetätigungsdaten erfaßt werden, dann wird die Genauigkeit und die Schnelligkeit des Verfahrens noch mehr gesteigert.

Die Raddaten werden beim vorliegenden Ausführungsbeispiel durch den Radsensor 67 erfaßt. Es kann sich dabei um einen Sensor bekannter Bauart, siehe den eingangs zitierten Stand der Technik, handeln, der mit einem gezahnten Rad 68, das mit dem Rad des Fahrzeugs rotiert, zusammenwirkt. Die vom Radsensor 67 erfaßten Raddaten werden über die Signalleitung 69 an den elektronischen Regler weitergeleitet.

Im elektronischen Regler wird eine Prüfung durchgeführt, ob die vom Radsensor gelieferten Raddaten zu den Bremsbetätigungsdaten korrelieren.

Ein einfacher Fall des Nichtkorrelierens wäre, wenn das Bremspedal getreten wird und der Radsensor keine Verzögerung des Rades anzeigt. Grund für das Nichtkorrelieren könnten beispielsweise eine Leckage, ein Defekt einer Dichtung oder eines Ventils, sein.

Die Korrelationskritierien sind Plausibilitätskritierien. Das heißt, einer bestimmten Bremspedalbetätigung müssen bestimmte Wirkungen (Verzögerungen) am Fahrzeugrad entsprechen. Oder dem Druck im Hauptzylinder ist im Normalfall eine bestimmte Verzögerung am Rad zuzuordnen. Oder anders ausgedrückt: Zu den Bremspedalvektoren, wie Weg, Geschwindigkeit und Beschleunigung einerseits, müssen andererseits bestimmte Vektoren des Fahrzeugs korrelieren. Diese Vektoren werden aufgrund der vom Radsensor gelieferten Daten ermittelt.

Zusätzlich zum Radsensor kann auch ein Fahrzeugsensor eingesetzt werden, der die Absolutgeschwindigkeit des Fahrzeugs oder die absolute Verzögerung/Beschleunigung des Fahrzeugs erfaßt. Die entsprechenden Daten werden bei der Prüfung, ob ein Korrelat zu den Bremsbetätigungsdaten vorliegt, ausgewertet.

Wenn kein gesonderter Fahrzeugsensor für die Absolutgeschwindigkeit des Fahrzeugs eingesetzt werden soll, kann die Absolutgeschwindigkeit des Fahrzeugs durch bekannte Annäherungsverfahren aufgrund der Radsensordaten als Referenzgeschwindigkeit dargestellt werden.

Dem Druck im Hauptzylinder/Radzylinder ist im Normalfall (keine Störung) eine bestimmte Radverzögerung und Fahrzeugverzögerung zuzuordnen. Das heißt, der Druck im Hauptzylinder/Radzylinder einerseits und die genannten Verzögerungen andererseits korrelieren zueinander.

Das gleiche trifft zu für das Volumen, das vom Hauptzylinderkolben in die Bremsanlage gepreßt wird. Dieses Volumen, als Funktion des Drucks, bestimmt, wenn keine Störung vorliegt, die Rad- bzw. Fahrzeugverzögerung.

In weiteren Ausführungsbeispielen können daher Volumenaufnahme der Bremsanlage und Druck im Hauptzylinder als Bremsbetätigungsdaten nutzbar gemacht werden. Da die Volumenaufnahme der Bremsanlage dem Volumen, das vom Hauptzylinder in die Bremsanlage verschoben wird, entspricht, können die Daten über die Volumenaufnahme und den Druck durch Volumen- und Drucksensoren im Bereich des Hauptzylinders erfaßt werden. Die Raddaten werden überprüft, ob sie mit den so gewonnenen Bremsbetätigungsdaten korrelieren.

Durch den elektronischen Regler wird, wie oben beschrieben, festgestellt, ob die Raddaten ein einer ordnungsgemäßen Bremsung entsprechendes Korrelat zu den Bremsbetätigungsdaten darstellen. Ist dies nicht der Fall, wird beispielsweise bei getretenem Bremspedal vom Radsensor keine Verzögerung angezeigt, dann liegt ein Fehler oder eine Störung im System vor.

Bei Nichtkorrelieren erzeugt der elektronische Regler ein Signal, das über die Signalleitung 70 an den Schalter 59 weitergeleitet wird. Der Schalter 59 schließt im Störfall die Stromleitung 71 zum Motor 58. Der Motor 58 wird in Betrieb gesetzt. Die Pumpe 53 fördert Druckmittel über die Leitungen 48,50 und das in offener Ruhestellung befindliche SO-Ventil 57 in den Radzylinder 51. Auf diese Weise kann im Störfall eine Bremsung des Fahrzeugs durch die Scheibenbremse 52 erfolgen. Bei entsprechender Ausgestaltung des elektronischen Reglers und des Druckmodulators kann außerdem eine weitere Antiblockier- und/oder Antriebsschlupfregelung durchgeführt werden.

Bei Antiblockier- und/oder Antriebsschlupfregelungen, die nicht wie im vorliegenden Ausführungsbeispiel nur mit einer Pumpe als Druckmittelquelle arbeiten, die beispielsweise mit einem hydropneumatischen Speicher ausgestattet sind, siehe hierzu den eingangs zitierten Sonderdruck aus der "Automobil Revue" Nr. 42-1985 "Antiblockiersystem" und die Offenlegungsschriften 36 12 793, 28 22 143, 36 11 931 kann in entsprechender Weise im Störfall Druckmittel aus dem Speicher in die Radzylinder strömen.

Durch die Auswertung bzw. Kontrolle, der Plausibilitätskritierien zwischen den Bremspedalvektoren: Weg, Geschwindigkeit, Beschleunigung einerseits und den Vektoren der Rad- bzw. Fahrzeugbewegungen andererseits kann gemäß der Erfindung auch bei den genannten Systemen des Standes der Technik eine Korrelationsprüfung durchgeführt werden.

Liegt keine Korrelation vor, wird beispielsweise bei Systemen mit hydropneuamtischem Speicher und/oder Verstärker dynamisch Bremsflüssigkeit in die nicht oder unterversorgten statischen Kreise oder Teile von Kreisen der Bremsanlage gefördert. Bei Anlagen, die mit Pumpen und Speicher arbeiten, kann, wie oben beschrieben, auch die Pumpe im Störfall sofort aktiviert werden.

Mit der Erfindung wird also quasi universell für alle existierenden Bremsanlagen und Antiblockier- und/oder Antriebsschlupfregelvorrichtungen vorgeschlagen, die sowieso im System vorhandene Druckmittelquelle (Pumpe und/oder Speicher) im Störfall sofort nutzbar zu machen, damit Druckmittel in die nicht ausreichend versorgten Teile des Systems eingespeist wird. Wodurch eine sichere Verzögerung des Fahrzeugs erreicht wird.

Beim Nichtkorrelieren der Raddaten mit den Bremsbetätigungsdaten kann außerdem durch den elektronischen Regler eine Fehlerwarnung ausgegeben, und der Fehler registriert werden. Dadurch wird eine vereinfachte Fehleranalyse, eine vereinfachte Behebung des Fehlers und eine leichte Dokumentation für die zukünftige Vermeidung von Fehlern möglich. Wenn notwendig, kann die Antiblockier- und/oder Antriebsschlupfregelvorrichtung ganz oder teilweise abgeschaltet werden.

Wichtig und von großem Vorteil ist, daß bei einer Bremsanlage, die mit Pumpe und/oder Speicher für die Antiblockier- und/oder Antriebsschlupfregelvorrichtung ausgerüstet ist, im Störfall die Basisbremse, also die Bremsanlage ohne Regelvorrichtung, durch die Pumpe und/oder den Speicher sofort mit Druckmittel versorgt wird. Dieser erhebliche Vorteil der Erfindung wird mit einem Minimum an baulichem Aufwand erzielt.

**Patentansprüche**

1. Verfahren zur Überwachung der Funktion oder Funktionsfähigkeit einer Bremsanlage, insbesondere einer geregelten hydraulischen Bremsanlage für Fahrzeuge, dadurch **gekennzeichnet**, daß bei Betätigung der Bremse meßtechnisch, insbesondere elektrisch, ein oder mehrere Daten mindestens eines Elements im Bereich der Bremsbetätigung erfaßt werden (Bremsbetätigungsdaten), daß meßtechnisch, insbesondere elektrisch, ein oder mehrere Daten mindestens eines Elements im Bereich des abzubremsenden Rades erfaßt werden (Raddaten) und daß in einer Überwachungseinheit geprüft wird, ob die Raddaten ein einer ordnungsgemäßen Bremsung entsprechendes Korrelat zu den Bremsbetätigungsdaten darstellen.

2. Verfahren nach Anspruch 1, dadurch **gekennzeichnet**, daß die Prüfung nach Plausibilitätskriterien durchgeführt wird, die zwischen den Bremspedalvektoren: Weg, Geschwindigkeit, Beschleunigung einerseits und den Vektoren der Fahrzeugbewegung andererseits bestehen.

3. Verfahren nach Anspruch 1 oder 2, dadurch **gekennzeichnet**, daß bei Nichtkorrelieren der Raddaten mit den Bremsbetätigungsdaten die Überwachungseinheit eine Störanzeige erzeugt und/oder die Regelvorrichtung ganz oder teilweise abschaltet.

4. Verfahren nach einem oder mehreren der Ansprüche 1 - 3, dadurch **gekennzeichnet**, daß bei Nichtkorrelieren der Raddaten mit den Bremsbetätigungsdaten durch die Überwachungseinheit ein Signal erzeugt wird, das ein Hilfsaggregat, beispielsweise eine Pumpe und/oder einen Energiespeicher, insbesondere hydropneumatischen Speicher, aktiviert, welches bei Bremsbetätigung eine ordnungsgemäße, nahezu ordnungsgemäße oder behelfsmäßige Bremsung herbeiführt.

5. Verfahren nach einem oder mehreren der Ansprüche 1 - 4, dadurch **gekennzeichnet**, daß zur Ermittlung der Bremsbetätigungsdaten die Wege, Geschwindigkeiten, Beschleunigungen mindestens eines Elements der Bremsbetätigung, z.B. des Bremspedals, des Pedalwerks, der Hauptzylinderkolbenstange, des Hauptzylinderkolbens und/oder damit wirkungsmäßig verbundener Teile sensiert werden.

6. Verfahren nach einem oder mehreren der Ansprüche 1 - 4, dadurch **gekennzeichnet**, daß zur Ermittlung der Bremsbetätigungsdaten der Hauptzylinderdruck sensiert wird.

7. Verfahren nach einem oder mehreren der Ansprüche 1 - 4, dadurch **gekennzeichnet**, daß zur Ermittlung der Bremsbetätigungsdaten das vom Hauptzylinder in die Bremsanlage geförderte Volumen sensiert wird.

8. Verfahren nach einem oder mehreren der Ansprüche 1 - 7, dadurch **gekennzeichnet**, daß zur Ermittlung der Raddaten die Raddrehzahl und/oder die Radumfangsgeschwindigkeit sensiert werden.

9. Verfahren nach einem oder mehreren der Ansprüche 1 - 8 für ein Antiblockier- und/oder Antriebsschlupfregelungssystem, dadurch **gekennzeichnet**, daß zur Prüfung, ob die Raddaten ein einer ordnungsgemäßen Bremsung entsprechendes Korrelat zu den Bremsbetätigungsdaten darstellen, als eine Größe die Absolutgeschwindigkeit des Fahrzeugs oder eine der Absolutgeschwindigkeit entsprechende oder eine an die Absolutgeschwindigkeit angenäherte Referenzgeschwindigkeit verwertet wird.

10. Bremsanlage zur Durchführung des Verfahrens nach einem oder mehreren der Ansprüche 1 - 9, dadurch **gekennzeichnet**, daß mindestens ein Element des Bremspedals und/oder Pedalwerks mit einem Wegsensor, Geschwindigkeitssensor und/oder Beschleunigungssensor ausgerüstet ist.

11. Bremsanlage nach Anspruch 10, dadurch **gekennzeichnet**, daß der Kolben (45) und/oder die Kolbenstange des Hauptzylinders (56) mit einem Wegsensor (64), Geschwindigkeitssensor und/oder Beschleunigungssensor ausgerüstet ist.

12. Bremsanlage zur Durchführung des Verfahrens nach einem oder mehreren der Ansprüche 1 - 9, dadurch **gekennzeichnet**, daß mindestens ein Druckraum (46) des Hauptzylinders (56) mit einem Drucksensor ausgerüstet ist.

13. Bremsanlage zur Durchführung des Verfahrens nach einem oder mehreren der Ansprüche 1 - 9, dadurch **gekennzeichnet**, daß der Hauptzylinder (56) mit einem Volumensensor ausgerüstet ist.